(19) Europäisches Patentamt / European Patent Office / Office européen des brevets

(11) **EP 2 595 738 B1**

(12) **FASCICULE DE BREVET EUROPEEN**

(45) Date de publication et mention de la délivrance du brevet:
**25.04.2018 Bulletin 2018/17**

(21) Numéro de dépôt: **11754890.9**

(22) Date de dépôt: **18.07.2011**

(51) Int Cl.:
*B01F 17/00* (2006.01)　　*B82Y 30/00* (2011.01)

(86) Numéro de dépôt international:
**PCT/FR2011/051717**

(87) Numéro de publication internationale:
**WO 2012/017160 (09.02.2012 Gazette 2012/06)**

(54) **COMPOSITION SOUS FORME D'EMULSION, COMPRENANT UNE PHASE HYDROPHOBE DISPERSEE DANS UNE PHASE AQUEUSE**

ZUSAMMENSETZUNG IN FORM EINER EMULSION MIT EINER IN EINER WÄSSRIGEN PHASE DISPERGIERTEN HYDROPHOBEN PHASE

COMPOSITION IN THE FORM OF AN EMULSION, COMPRISING A HYDROPHOBIC PHASE DISPERSED IN AN AQUEOUS PHASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2010 FR 1055836**

(43) Date de publication de la demande:
**29.05.2013 Bulletin 2013/22**

(73) Titulaire: **Institut National de la Recherche Agronomique (INRA) 75007 Paris (FR)**

(72) Inventeurs:
• **CATHALA, Bernard**
  **F-44240 La Chapelle Sur Erdre (FR)**
• **CAPRON, Isabelle**
  **F-44300 Nantes (FR)**
• **BIZOT, Hervé**
  **F-44240 Suce-sur-Erdre (FR)**
• **BULEON, Alain**
  **F-44240 La Chapelle Sur Erdre (FR)**
• **KALASHNIKOVA, Irina**
  **44000 Nantes (FR)**

(74) Mandataire: **Jacobacci Coralis Harle 32, rue de l'Arcade 75008 Paris (FR)**

(56) Documents cités:
**EP-A1- 1 057 477**

• **OUGIYA H ET AL: "EMULSION-STABILIZING EFFECT OF BACTERIAL CELLULOSE", BIOSCIENCE BIOTECHNOLOGY BIOCHEMISTRY, JAPAN SOCIETY FOR BIOSCIENCE, BIOTECHNOLOGY, AND AGROCHEMISTRY, TOKYO, JAPAN, vol. 61, no. 9, 1 janvier 1997 (1997-01-01), pages 1541-1545, XP000876735, ISSN: 0916-8451**
• **N.P. ASHBY, B.P. BINKS: "Pickering emulsions stabilised by Laponite clay particles", PHYS. CHEM. CHEM. PHYS. (PCCP), vol. 2, 24 novembre 2000 (2000-11-24), pages 5640-5646, XP002628843,**
• **B. MADIVALA ET AL.: "Exploiting particle shape in solid stabilized emulsions", SOFT MATTER, vol. 5, 2 mars 2009 (2009-03-02), pages 1717-1727, XP002628844,**

## Description

La présente invention concerne une composition sous forme d'émulsion, comprenant une phase hydrophobe dispersée dans une phase aqueuse.

## ETAT DE LA TECHNIQUE

Une émulsion est du genre « huile dans eau », lorsque (i) la phase dispersante est une phase aqueuse et (ii) la phase dispersée est une phase organique (hydrophobe ou huileuse). Une telle émulsion est encore désignée couramment par le sigle « H/E ».

Or, cet état physique d'émulsion n'est pas stable : la phase organique a tendance à se regrouper pour ne former qu'un seul ensemble continu, notamment en raison de sa différence de densité par rapport à la phase aqueuse.

Pour obtenir cette stabilité, une première approche consiste à employer des composés dits « stabilisant », conférant à l'émulsion des propriétés rhéologiques aptes à ralentir le phénomène de coalescence.

Pour stabiliser les émulsions, une autre démarche consiste à employer des composés dits « émulsifiant » ou « émulsionnants ».

Ces composés émulsifiants sont le plus souvent des agents tensio-actifs émulsionnants (dits encore « agents de surface ») qui, grâce à leur structure amphiphile, se placent à l'interfaces huile/eau et stabilisent les gouttelettes organiques dispersées.

Cependant, les composés émulsifiants de ce genre n'offrent pas toujours la stabilité recherchée dans le temps. De plus, les agents tensio-actifs de synthèse présentent souvent des inconvénients sur le plan écologique.

Ces composés émulsifiants/émulsionnants peuvent également consister en des particules solides, qui permettent l'obtention d'émulsions dites « émulsions de Pickering ».

Les émulsions de Pickering sont des émulsions dépourvues d'agents tensio-actifs, et qui sont stabilisées par des particules en suspension colloïdales venant s'ancrer à l'interface huile/eau.

Contrairement aux agents tensio-actifs qui s'adsorbent et se désorbent continuellement, les particules en suspension colloïdale s'adsorbent fortement aux interfaces (voire même de manière irréversible).

Ces émulsions de Pickering présentent en pratique des propriétés très originales et intéressantes, notamment en comparaison avec des émulsions classiques stabilisées par des agents tensio-actifs.

En particulier, il est possible de fabriquer très facilement des émulsions, allant du micromètre au centimètre, en exploitant notamment le phénomène dit de « coalescence limitée ». De plus, les compositions obtenues sont beaucoup plus stables que leurs homologues stabilisées par des agents tensio-actifs.

Pour illustrer une telle émulsion de Pickering, le document ASHBY et al. (« Pickering emulsions stabilised by Laponite clay particles », Phys. Chem. Chem. Phys, vol. 2, 2000-11-24) étudie la stabilisation d'émulsion au moyen d'un composé dénommé « Laponite RD », consistant en une argile smectique du type hectorite.

Le document MADIVALA et al. (« Exploiting particle shape in solid stabilized emulsions », SOFT MATTER, vol. 5, 2009-03-02) décrit la stabilisation d'émulsion notamment au moyen de particules hématites ($\alpha$-Fe2O3) sous forme d'aiguilles.

Le document OUGIYA et al. (« Emulsion-stabilizing effect of bacterial cellulose », Bioscience biotechnology biochemistry, vol. 61, n°9, 1997-01-01) décrit que la cellulose microcristalline (« microcrystalline cellulose MCC »), en combinaison avec de la carboxyméthyl cellulose (CMC), est apte à stabiliser une émulsion. Il est également étudié un produit dénommé « Avicel », c'est-à-dire une cellulose microcristalline en forme de bâtonnet d'une épaisseur de 0,3 $\mu$m contenant de la carboxyméthyl cellulose à 11 % en poids.

Mais ce document présente encore des résultats qui montrent une efficacité limitée, voire une inefficacité, de la cellulose microcristalline pour stabiliser les émulsions.

Par ailleurs, le document FR-2 794 466 ou le document EP-1 057 477 décrit l'utilisation des fibrilles de cellulose dans les compositions cosmétiques du type émulsions H/E, pour assurer la stabilisation de ces dernières en l'absence de tout agent tensio-actif.

Les fibrilles de cellulose employées ont une longueur supérieure à 1 $\mu$m et de préférence allant de 5 à 40 $\mu$m, pour un diamètre compris entre 2 et 100 manomètres. Elles présentent un rapport longueur/diamètre égal ou supérieur à 30.

De plus, les fibrilles de cellulose utilisées sont sous une forme partiellement amorphe : elles présentent de préférence un taux de cristallinité inférieur ou égal à 50 %, et de préférence compris entre 15 à 50 %.

Or, il s'avère que de telles fibrilles de cellulose d'une longueur supérieure à 1 $\mu$m ne permettent pas l'obtention d'émulsions calibrées de taille contrôlée et homogène, et par conséquent ne permettent pas la faisabilité d'émulsions monodisperses avec des tailles de gouttelettes organiques réduites. En fait, avec ces fibrilles de cellulose d'une longueur supérieure à 1 $\mu$m, l'effet de stabilisation d'une émulsion est opéré par la formation d'un réseau de fibrilles enchevêtrées à l'interface eau/huile, ce qui génère des émulsions comprenant des gouttes de grande taille qui sont retrouvées sous la forme d'une pluralité d'agrégats de gouttes en suspension. Les émulsions résultantes ne sont pas homogènes.

## RESUME DE L'INVENTION

L'objectif de l'invention est de proposer de nouvelles compositions du genre émulsion huile dans eau (avantageusement de la famille des émulsions de Pickering), contenant des particules émulsifiantes aptes à stabiliser l'émulsion, avantageusement sans agent tensio-actif et cela de manière particulièrement stable dans le temps.

La présente invention concerne ainsi une composition sous forme d'une émulsion comprenant une phase hydrophobe dispersée dans une phase aqueuse, laquelle composition contient des particules émulsifiantes consistant en des nanocristaux de cellulose de forme allongée, avantageusement encore de forme aciculaire, comportant une longueur comprise entre 25 nm et 1 $\mu$m, et une largeur comprise entre 5 et 30 nm.

Les nanocristaux de cellulose ont fait l'objet de nombreuses études, notamment en vue de caractériser leur morphologie et leur structure cristalline.

Cependant, à la connaissance des inventeurs, de tels nanocristaux de cellulose n'ont jamais été utilisés en tant que composés émulsifiant / émulsionnant pour la stabilisation d'émulsions.

Or, tel que démontré dans les exemples suivants, une telle composition s'avère particulièrement stable dans le temps, bien qu'exempte de tensio-actifs. Cette émulsion résiste en plus à des traitements thermiques, aussi bien de type congélation que de type chauffage.

D'autres caractéristiques avantageuses, pouvant être prises en combinaison ou indépendamment les unes des autres, sont détaillées ci-dessous :

- les nanocristaux de cellulose vérifient les caractéristiques suivantes : une longueur comprise entre 100 nm et 1 $\mu$m, et une largeur comprise entre 5 et 20 nm ;
- les nanocristaux de cellulose ont un rapport longueur/largeur supérieur à 1 et inférieur à 100, et de préférence compris entre 10 et 55 ;
- les nanocristaux de cellulose ont une densité de charges de surface maximale de 0,5 e.nm$^{-2}$, et de préférence une densité de charges de surface maximale de 0,31 e.nm$^{-2}$, e correspondant à une charge élémentaire ; selon un premier mode de réalisation, les nanocristaux de cellulose comportent une surface chargée, avantageusement des charges de surface négatives, avec une densité de charges de surface comprise entre 0,01 e.nm$^{-2}$ et 0,31 e.nm$^{-2}$ ; selon un second mode de réalisation, les nanocristaux de cellulose ont une surface neutre, la densité de charges de surface étant inférieure ou égale à 0,01 e.nm$^{-2}$ ;
- les nanocristaux de cellulose comportent, en surface, des groupements hydrophobes.

La présente invention porte également sur l'utilisation de nanocristaux de cellulose tels que définis ci-dessus, pour stabiliser une émulsion comprenant une phase hydrophobe dispersée dans une phase aqueuse.

L'invention concerne également le procédé pour la fabrication d'une composition sous forme d'émulsion définie ci-dessus, comprenant les étapes suivantes :

(a) la fourniture de nanocristaux de cellulose tels que définis ci-dessus, puis

(b) l'incorporation desdits nanocristaux de cellulose dans la phase aqueuse de ladite composition, de sorte à stabiliser ladite émulsion.

Les nanocristaux de cellulose fournis à l'étape (a) sont avantageusement obtenus par un procédé de fabrication à partir d'une cellulose, ledit procédé de fabrication étant choisi parmi l'un des procédés suivants : fractionnement mécanique, hydrolyse chimique ménagée, et dissolution/recristallisation

Dans ce cas, le procédé de fabrication des nanocristaux de cellulose est avantageusement suivi par un procédé de post-modification desdits nanocristaux de cellulose à l'issue duquel leur densité de charges de surface et/ou leur hydrophobicité sont modifiées.

Pour une modification de la densité de charge, le procédé de post-modification consiste avantageusement en un procédé d'introduction ou d'hydrolyse des groupements portant les charges de surface, lesquels groupements sont de préférence choisis parmi les groupements sulfonate, carboxylate, phosphate, phosphonate et sulfate.

Selon un premier mode de réalisation préféré, le procédé de fabrication consiste en un procédé d'hydrolyse acide ménagée de la cellulose par l'acide sulfurique, pour obtenir des nanocristaux de cellulose munis de groupements sulfate en surface ; et le procédé de post-modification optionnel consiste en un procédé d'hydrolyse contrôlée desdits groupements sulfate.

Selon un second mode de réalisation préféré, le procédé de fabrication consiste en un procédé d'hydrolyse acide ménagée de la cellulose par l'acide chlorhydrique ; et le procédé de post-modification optionnel consiste en un procédé de post-sulfatation desdits nanocristaux de cellulose.

## DESCRIPTION DETAILLEE DE L'INVENTION

Composition selon l'invention

Tel qu'évoqué ci-dessus, la composition selon l'invention consiste en composition sous forme d'une émulsion comprenant une phase hydrophobe dispersée dans une phase aqueuse, et contenant des particules émulsifiantes (ou autrement dit « particules émulsionnantes ») consistant en des nanocristaux de cellulose.

Par « émulsion », on entend un mélange, macroscopiquement homogène mais microscopiquement hétérogène, de deux phases liquides non miscibles.

En l'occurrence, l'émulsion selon l'invention est du genre « huile dans eau », c'est-à-dire que (i) la phase dispersante est une phase aqueuse et (ii) la phase dispersée est une phase organique (hydrophobe ou huileuse). Une telle émulsion est encore désignée couramment par le sigle « H/E ».

Pour assurer sa stabilité, l'émulsion selon l'invention contient ainsi des nanocristaux de cellulose.

Les nanocristaux de cellulose sont connus de l'art antérieur, souvent sous la dénomination de « whiskers » de cellulose ou de « nanowiskers » de cellulose.

De tels nanocristaux de cellulose peuvent être issus de diverses sources : végétale (e.g. pulpe de bois, coton ou algues), animale (e.g. tunicier), bactérienne, cellulose régénérée ou cellulose mercerisée. Ils sont par exemple décrits dans le document Samir et al. (2005, Biomacromolecules, Vol.6 : 612-626) ou dans le document Elazzouzi-Hafraoui et al. (Biomacromolecules. 2008;9(1):57-65.).

Plus précisément, les nanocristaux de cellulose sont des particules solides hautement cristallines.

Ces nanocristaux de cellulose sont dépourvus, ou au moins pratiquement dépourvus, de partie amorphe. Ils présentent de préférence un taux de cristallinité d'au moins 60%, et de préférence compris entre 60% et 95% (voir par exemple Elazzouzi-Hafraoui et al., 2008 précité).

Pour la composition selon l'invention, les nanocristaux de cellulose ont une forme allongée, c'est-à-dire avantageusement un rapport longueur/largeur supérieur à 1.

De préférence encore, ces nanocristaux de cellulose ont une forme aciculaire, c'est-à-dire une forme linéaire et pointue rappelant une aiguille.

Cette morphologie peut être observée par exemple par microscopie électronique, en particulier par microscopie électronique en transmission (ou « MET »).

Toujours dans la composition selon l'invention, ces nanocristaux de cellulose comportent les caractéristiques dimensionnelles suivantes : (i) une longueur comprise entre 25 nm et 1 $\mu$m, et (ii) une largeur comprise entre 5 et 30 nm.

Par « longueur », on entend la plus grande dimension des nanocristaux, séparant deux points situés aux extrémités de leur axe longitudinal respectif.

Par « largeur », on entend la dimension mesurée le long des nanocristaux, perpendiculairement à leur axe longitudinal respectif et correspondant à leur section maximale.

Dans des modes de réalisation préférés, les nanoparticules de cellulose forment une population relativement homogène de nanocristaux dont les valeurs expérimentales de longueur suivent une distribution Gaussienne centrée sur la valeur de longueur assignée pour ladite population de nanocristaux. Dans ces modes de réalisation préférés, on peut utiliser par exemple des nanocristaux de cellulose d'une « seule taille déterminée », comme cela est illustré dans les exemples.

En pratique, la morphologie et les dimensions des nanocristaux peuvent être déterminées en utilisant différentes techniques d'imagerie comme la microscopie électronique à transmission (MET) ou la microscopie à force atomique (AFM), la diffusion des rayons X ou des neutrons aux petits angles (respectivement SAXS pour « Small-Angle X-ray Scattering » et SANS pour « Small-Angle Neutron Scattering ») ou encore la diffusion dynamique de la lumière (DDL).

Selon un mode préféré de réalisation, les nanocristaux de cellulose présentent les dimensions suivantes : (i) une longueur comprise entre 100 nm et 1 $\mu$m, et (ii) une largeur comprise entre 5 et 20 nm.

Avantageusement encore, les nanocristaux de cellulose ont un rapport longueur/largeur supérieur à 1 et inférieur à 100, de préférence compris entre 10 et 55.

Un rapport longueur/largeur supérieur à 1 et inférieur à 100 englobe les rapports longueur/largeur d'au moins 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 et 99.

Un rapport longueur/largeur compris entre 10 et 55 englobe les rapports longueur/largeur choisis parmi 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53 et 54.

Par exemple, les nanocristaux obtenus à partir de la cellulose de coton comportent avantageusement une longueur comprise entre 100 nm et 200 nm, pour une largeur comprise entre 12 et 15 nm. Le rapport longueur/largeur est compris avantageusement entre 7 et 17, et de préférence entre 10 et 13.

Selon un autre exemple, les nanocristaux peuvent être obtenus à partir d'une cellulose bactérienne. De tels nanocristaux (connus sous l'appellation de « nanocristaux de cellulose bactérienne » ou « BCN ») comportent avantageusement une longueur comprise entre 600 nm et 1 $\mu$m, pour une largeur comprise entre 12 et 17 nm. Le rapport longueur/largeur est compris avantageusement entre 35 et 83, de préférence entre 45 et 55.

Pour optimiser la stabilité des émulsions de Pickering, les nanocristaux de cellulose sont avantageusement choisis en fonction de leurs caractéristiques de surface, tenant compte notamment de (i) l'aspect électrostatique et/ou (ii) de l'hydrophobicité ou de l'hydrophilicité.

Concernant l'aspect électrostatique de surface, les nanocristaux de cellulose stabilisant l'émulsion ont avantageusement une densité de charges de surface maximale de 0,5 e.nm$^{-2}$, et de préférence une densité de charges de surface maximale de 0,31 e.nm$^{-2}$. On note que « e » correspond à une charge élémentaire.

La densité de charge en surface et la force ionique de la phase aqueuse sont avantageusement adaptées l'une par rapport à l'autre.

Avantageusement, cette densité de charge de surface est déterminée par dosage conductimétrique ; un mode de réalisation particulier est décrit ci-après dans la partie Exemples.

Plus précisément et selon un mode de réalisation, les nanocristaux de cellulose comportent une surface chargée, avec une densité de charges de surface comprise entre 0,01 e.nm$^{-2}$ et 0,31 e.nm$^{-2}$.

Comme cela est décrit dans les exemples, la densité désirée de charges de surface peut être obtenue par un contrôle du degré de sulfatation des nanocristaux. Le degré de sulfatation des nanocristaux peut être contrôlé en soumettant les nanocristaux de cellulose à un traitement de sulfatation et, si nécessaire, à un traitement subséquent de désulfatation.

La demanderesse a montré qu'une émulsion de Pickering stable est obtenue lorsqu'on utilise des nanocristaux de cellulose pratiquement non chargés.

La demanderesse a également montré qu'au-delà de 0,31 e.mm$^{-2}$, la stabilité de l'émulsion de Pickering est très significativement altérée. La demanderesse a montré que des nanocristaux de cellulose possédant une valeur de densité de charge trop grande présentent une surface trop hydrophile et sont retrouvés en grande quantité en suspension dans la phase aqueuse au lieu d'être localisés à l'interface huile/eau pour stabiliser l'émulsion.

Dans ce cas, les nanocristaux de cellulose comportent avantageusement des charges de surface négatives, qui sont avantageusement portées par des groupements anioniques en surface.

Les groupements anioniques des nanocristaux de cellulose sont choisis par exemple parmi les groupements sulfonate, les groupements carboxylate, les groupements phosphate, les groupements phosphonate et les groupements sulfate.

La transposition d'une valeur de degré de substitution (DS) à la valeur correspondante de densité de charges de surface (e.mm$^{-2}$) est directe, dès lors que le nombre de charges du groupement chimique considéré est connu. A titre illustratif, pour les groupements sulfate, qui portent une charge unique, la valeur de DS (nombre de groupes sulfate par unité de surface) est identique à la valeur de densité de charges de surface (nombre de charges par unité de surface identique).

En d'autres termes, ces nanocristaux de cellulose ont un degré de substitution (DS) compris entre 10$^{-3}$ et 10$^{-2}$ e/nm$^2$, ou un degré de substitution en surface (DSs) compris entre DS/0,19 à DS/0,4, selon la morphologie des nanocristaux utilisés.

Selon un autre mode de réalisation, les nanocristaux de cellulose ont une surface neutre. Dans ce cas, la densité de charges de surface est avantageusement inférieure ou égale à 0,01 e.nm$^{-2}$.

En pratique, la densité de charge des nanocristaux de cellulose est avantageusement choisie en fonction de la force ionique de la phase aqueuse de la composition.

Les nanocristaux de cellulose utilisés selon l'invention consistent avantageusement en des nanocristaux de cellulose qui n'ont pas subi de traitement d'hydrophobisation. Cela englobe les nanocristaux de cellulose dont les groupes hydroxyle n'ont pas été fonctionnalisés par des atomes ou des groupes hydrophobes. Typiquement, cela englobe les nanocristaux qui n'ont pas subi de traitement d'hydrophobisation par estérification de groupes hydroxyle par des acides organiques.

Dans des modes de réalisation avantageux, les nanocristaux de cellulose qui sont utilisés pour obtenir l'émulsion de Pickering ne subissent aucun traitement chimique postérieur à leur obtention, autre qu'un traitement de désulfatation ou de sulfatation. Notamment, on utilise préférentiellement des nanocristaux de cellulose qui n'ont pas été fonctionnalisés ou greffés avec des groupes permettant leur réticulation subséquente, par exemple par des groupes du type méthacrylate ou diméthacrylate. Egalement, on utilise préférentiellement des nanocristaux de cellulose qui n'ont pas été fonctionnalisés ou greffés par des molécules polymères, telles qu'un polyéthylène glycol, un poly(hydroxyester) ou encore un polystyrène.

La demanderesse a également montré que la stabilité de l'émulsion de Pickering peut être accrue en utilisant une phase aqueuse ayant une force ionique minimale déterminée.

En l'occurrence, une stabilité maximale de l'émulsion de Pickering est obtenue pour une valeur de force ionique correspondant à une concentration finale de NaCl de 0,02 M dans ladite émulsion.

Sans vouloir être lié par une quelconque théorie, le demandeur pense que la valeur seuil de force ionique de la phase aqueuse à partir de laquelle une stabilité optimale de l'émulsion est obtenue est celle pour laquelle les charges (contre-ions) présentes dans la phase aqueuse neutralisent les charges (ions) présentes sur les nanocristaux.

Comme cela est montré dans les exemples, la présence de contre-ions en excès n'influe pas significativement sur les propriétés de stabilité de l'émulsion. Pour un excès massif de contre-ions, qui n'a pas été atteint dans les conditions opératoires des exemples, on peut présager une altération de la stabilité de l'émulsion, du fait d'une précipitation des nanocristaux.

A titre indicatif, selon un mode de réalisation particulier, pour une composition comportant une force ionique inférieure à la force ionique équivalente à 10 mM de NaCl, les nanocristaux de cellulose comportent avantageusement une densité de charges de surface maximale de 0,03 e.nm$^{-2}$.

Pour une composition comportant une force ionique supérieure à la force ionique équivalente à 10 mM de NaCl, la densité de charges de surface portée par les nanocristaux de cellulose semble ne plus être un paramètre pertinent pour la stabilisation effective de l'émulsion.

Une force ionique supérieure à la force ionique équivalente à 10 mM de NaCl inclut une force ionique supérieure à 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 210, 220, 230, 240, 250, 260, 270, 275, 280, 290, 300, 310, 315, 320, 325, 330, 335, 340, 345, 350, 360, 370, 375, 380, 390, 400, 410, 420, 430, 440, 450, 460, 470, 480, 490, ou supérieure à 500 mM de NaCl. De préférence, la force ionique est inférieure à une force ionique équivalent à 3 M de NaCl.

Les résultats des exemples montrent que, dans certains modes de réalisation d'une émulsion selon l'invention, la stabilité desdites émulsions est déjà maximale pour une force ionique de la composition de 20 mM de NaCl, et le niveau de stabilité de l'émulsion étant maintenu pratiquement inchangé pour toutes les valeurs de force ionique testées, c'est-à-dire au moins jusqu'à une valeur de force ionique équivalent à la force ionique de 0,5 M de NaCl.

De manière alternative ou complémentaire, toujours pour optimiser la stabilisation d'émulsions, les nanocristaux de cellulose comportent des groupements hydrophobes en surface.

La densité de groupements hydrophobes en surface peut être un paramètre intéressant pour tenir compte de la tension interfaciale (nature de la phase aqueuse et de la phase huileuse).

De tels groupements hydrophobes sont choisis avantageusement parmi les groupements acétyle, alkyle, aryle, phényle, benzyle, hydroxybutyle, hydroxypropyle, polycaprolactone (ou PCL).

Les nanocristaux de cellulose sont généralement incorporés dans la phase aqueuse de la composition.

Selon un mode de réalisation préféré, la composition d'émulsion de Pickering est stabilisée uniquement par les nanocristaux de cellulose, sans ajout d'autres composés émulsifiant ou stabilisant.

Selon un mode de réalisation préféré, la composition d'émulsion de Pickering ne comprend aucune particule solide, non fonctionnalisée ou fonctionnalisée, autre que les nanocristaux de cellulose.

De manière alternative, la composition est stabilisée par les nanocristaux de cellulose, rapportés en combinaison avec au moins un autre composé ayant des propriétés émulsifiantes et/ou des propriétés stabilisantes, par exemple avec ou sans agent(s) tensio-actif(s).

Par exemple, la composition de Pickering selon l'invention peut contenir du CTAB (bromure d'hexadécyltriméthylammonium).

La composition comprend avantageusement de 0,035% à 2% en poids, de préférence encore de 0,05% à 1% en poids, de nanocristaux de cellulose par rapport au poids total de ladite composition.

Cette proportion massique en nanocristaux de cellulose peut être évaluée par exemple par extrait sec de la phase aqueuse ou par dosage des sucres après hydrolyse.

Il est montré selon l'invention qu'une quantité de nanocristaux de cellulose suffisante pour l'obtention d'un taux de recouvrement d'au moins 60% est préféré pour la préparation d'une composition d'émulsion de Pickering. En particulier, lorsqu'on utilise une masse de nanoparticules trop faible par rapport au volume d'huile, il est susceptible de se produire une coalescence des gouttelettes de la phase hydrophobe de manière à tendre vers un recouvrement minimum de 60%.

Au sens de la présente description, le « taux de recouvrement » par des nanocristaux de cellulose représente la proportion de la surface des gouttelettes de phase hydrophobe dispersées dans la phase aqueuse, à l'interface huile/eau, qui est recouverte par les nanocristaux de cellulose.

Le taux de recouvrement « C », qui est le rapport entre (i) la surface de nanocristaux de cellulose présents dans la composition d'émulsion susceptible de se stabiliser à l'interface phase interne hydrophobe/phase continue hydrophile et (ii) la surface totale des gouttelettes de phase hydrophobe dans ladite composition d'émulsion, est calculé selon la formule (I) suivante :

$$C = S_p / S_d \quad (I),$$

dans laquelle :

- $S_p$ représente la surface de nanocristaux de cellulose susceptible de se stabiliser à l'interface présents dans la composition d'émulsion, et
- $S_d$ représente la surface totale des gouttelettes de phase hydrophobe dans la composition d'émulsion.

La surface des nanocristaux est assimilée à une surface à un seul plan, en prenant l'hypothèse que les nanocristaux sont alignés sur ladite surface en un ruban plat.

En conséquence, la valeur de surface des nanocristaux peut être calculée selon la formule (II) suivante :

$$S_P = N_P Ll = \frac{m_p}{h\rho_p} \quad \text{(II)},$$

avec :

$$N_P = \frac{m_p}{Vp \times \rho_p} = \frac{m_p}{L \times l \times h \times \rho_p}$$

dans laquelle :

- $S_p$ représente la surface de nanocristaux de cellulose susceptible de se stabiliser à l'interface présents dans la composition d'émulsion,
- $N_p$ signifie le nombre de nanocristaux de cellulose présentes dans la phase aqueuse,
- L signifie la longueur des nanocristaux de cellulose ,
- l signifie la largeur des nanocristaux de cellulose
- h signifie la hauteur des nanocristaux de cellulose
- $m_p$ signifie la masse de nanocristaux de cellulose, et
- p signifie la densité des nanocristaux de cellulose

La surface des gouttelettes est la surface à l'interface huile/eau, qui a été calculée pour chaque diamètre moyen de gouttelettes selon D(3,2).

En conséquence, la valeur de surface des gouttelettes peut être calculée selon la formule (III) suivante :

$$S_d = 4\pi R^2 \times Ng = 4\pi R^2 \times \frac{3V_{oil}}{4\pi R^3} = \frac{3V_{oil}}{R} \quad \text{(III)},$$

avec :

$$N_g = \frac{Voil}{4/3\pi R^3} \quad \text{(IV)}$$

dans laquelle :

- Ng signifie le nombre de gouttes présentes dans l'émulsion
- $S_d$ signifie la valeur de surface des gouttelettes de phase hydrophobe,
- R signifie le rayon moyen des gouttelettes, et
- $V_{oil}$ signifie le volume total de la phase interne hydrophobe.

La valeur finale du taux de recouvrement « C » est calculée selon la formule (I) déjà mentionnée ci-dessus :

$$C = Sp / Sd \text{ (I)},$$

dans laquelle :

- $S_p$ représente la surface de nanocristaux de cellulose susceptible de se stabiliser à l'interface et présents dans la composition d'émulsion,
- $S_d$ représente la surface totale des gouttelettes de phase hydrophobe dans la composition d'émulsion.

Dans la composition d'émulsion de Pickering, la phase dispersée hydrophobe représente avantageusement moins de 50% en volume par rapport au volume total de la composition.

La phase hydrophobe représente avantageusement de 5% à 45% en volume par rapport au poids total de la composition.

Tel que décrit ci-dessous, la phase hydrophobe est choisie parmi les huiles végétales, les huiles animales, les huiles minérales, les huiles de synthèse, les solvants organiques hydrophobes et les polymères liquides hydrophobes.

La composition d'émulsion de Pickering selon l'invention peut contenir encore tout autre composé approprié à son utilisation ou destination finale.

Cette composition d'émulsion de Pickering peut ainsi être adaptée à l'application choisie avantageusement parmi les compositions alimentaires, les compositions cosmétiques, les compositions pharmaceutiques et les compositions phytosanitaires.

De façon connue et en fonction de son application, la composition peut contenir par exemple, sans être aucunement limitatif, des principes actifs et des adjuvants tels que des conservateurs, des gélifiants, des solvants, des matières colorantes, etc.

La phase hydrophobe

La phase hydrophobe est choisie parmi les huiles végétales, les huiles animales, les huiles minérales, les huiles de synthèse, les solvants organiques hydrophobes et les polymères liquides hydrophobes.

La phase hydrophobe peut être choisie parmi un alcane ou un cycloalcane, substitué ou non substitué.

Pour la phase hydrophobe, un alcane ayant plus de 5 atomes de carbone englobe les alcanes ayant plus de 6, 7, 8, 9, 10, 11, 12, 13, 14, 15, 16 ou plus de 17 atomes de carbone, c'est-à-dire notamment, selon la nomenclature conventionnelle, les alcanes en $C_6$-$C_{18}$ et qui sont de formule $C_n H_{2n+2}$. Lesdits alcanes peuvent être linéaires ou ramifiés.

Lesdits alcanes englobent les alcanes linéaires, cycliques ou ramifiés, des types hexane, heptane, octane, nonane, décane, undécane, dodécane, tridécane, tétradécane, pentadécane, hexadécane, heptadécane et octadécane.

Les alcanes substitués englobent les alcanes linéaires ou ramifiés ci-dessus dont au moins un atome d'hydrogène est substitué par un halogène choisi parmi le chlore, le brome, l'iode ou le fluor. La substitution d'au moins un atome d'hydrogène, englobe la substitution de 2, 3, 4 ou 5 atomes d'hydrogene.

Dans certains modes de réalisation, ledit cycloalcane est un cyclohexane non substitué ou substitué. Le cyclohexane peut être substitué par 1, 2, 3 ou 4 atomes d'halogène choisi parmi le chlore, le brome, l'iode ou le fluor.

La phase hydrophobe peut encore comprendre un mélange de tels alcanes, par exemple sous la forme d'une huile de paraffine.

Dans certains modes de réalisation, la phase hydrophobe comprend un ou plusieurs monomères hydrophobes polymérisables, d'un type connu.

Dans d'autres modes de réalisation, la phase hydrophobe consiste essentiellement en une composition d'un monomère hydrophobe ou d'un mélange de monomères hydrophobes. A titre illustratif, la phase hydrophobe peut consister essentiellement en une composition de monomères de styrène.

La phase hydrophile

Par « phase hydrophile » ou « phase aqueuse », on entend un liquide immiscible avec la phase hydrophobe. On utilise de préférence une phase hydrophile miscible avec l'eau. La phase hydrophile peut être de l'eau, comme cela est illustré dans les exemples.

La phase hydrophile peut être un solvant hydrophile, de préférence un solvant portant des groupes hydroxyle, tels que des glycols. Pour la phase hydrophile, les glycols englobent le glycérol et les polyéthylène glycols. La phase hydrophile peut également contenir des agents hydrosolubles texturants, notamment épaississants ou viscosifiants, tels que des polysaccharides (par exemple dextran ou xanthane, ce dernier étant très utilisé dans les applications alimentaires).

La phase hydrophile peut être constituée, en partie ou totalement, par un liquide organique choisi parmi un alcool tel que l'éthanol, ou encore l'acétone.

La phase hydrophile peut comprendre un seul liquide ou un mélange de plusieurs liquides.

Procédé d'obtention de la composition selon l'invention

Le procédé pour la fabrication de la composition selon l'invention, comprend avantageusement les étapes suivantes :

(a) la fourniture de nanocristaux de cellulose tels que définis ci-dessus, puis
(b) l'incorporation desdits nanocristaux de cellulose dans la phase aqueuse de ladite composition, de sorte à stabiliser ladite émulsion.

Les étapes générales pour la fabrication de l'émulsion peuvent être réalisées selon des procédures classiques, notamment employées pour la fabrication d'émulsion de Pickering.

On peut ainsi par exemple employer une technique d'obtention d'émulsion par ultrasons.

En particulier, l'étape d'incorporation des nanocristaux de cellulose dans la phase aqueuse correspond aux étapes mises en oeuvre pour l'incorporation de particules colloïdales lors de la fabrication d'émulsions de Pickering.

Les nanocristaux de cellulose fournis à l'étape (a) sont avantageusement obtenus par un procédé de fabrication à partir d'une cellulose.

La cellulose est choisie avantageusement parmi l'une au moins des celluloses d'origine suivante : végétale, animale, bactérienne, algale ou régénérée à partir d'une cellulose transformée de sources commerciales.

La principale source de cellulose est la fibre végétale. La cellulose y est présente comme composante de la paroi cellulaire, sous forme de faisceaux de micro-fibrilles.

Une partie de ces micro-fibrilles est composée de cellulose dite « amorphe », alors qu'une seconde partie est constituée de cellulose dite « cristalline ».

Les nanocristaux de cellulose sont avantageusement issus de la cellulose cristalline isolée à partir des fibres végétales, par élimination de la partie amorphe de cellulose.

Parmi les sources végétales, on peut citer par exemple le coton, le bouleau, le chanvre, la ramie, le lin, l'épicéa.

Parmi les sources algales de cellulose, on peut citer par exemple *Valonia* ou *Chladophora.*

Parmi les sources bactériennes de cellulose, on peut citer *Gluconoacetobacter xylinus* qui produit du Nata de coco par incubation directement dans du lait de noix de coco.

Parmi les sources animales de cellulose, on peut citer par exemple le tunicier.

La cellulose peut également être régénérée à partir d'une cellulose transformée de sources commerciales, notamment sous forme de papier.

On peut citer par exemple du papier de filtration Whatman (marque déposée) pour l'obtention de cellulose de coton.

La cellulose peut également consister en une cellulose dite « mercerisée » (la mercerisation consiste en un traitement de cellulose généralement à base d'hydroxyde de sodium).

Partant de cette matière première cellulosique, le procédé de fabrication des nanocristaux est avantageusement choisi parmi l'un des procédés suivants : fractionnement mécanique, hydrolyse chimique ménagée, et dissolution/recristallisation

Par « fractionnement mécanique », on entend une opération classique d'homogénéisation haute pression.

Par « hydrolyse chimique ménagée », on entend un traitement par un composé chimique acide de la cellulose, dans des conditions assurant l'élimination de sa partie amorphe.

Le composé chimique acide est avantageusement choisi parmi l'acide sulfurique ou l'acide chlorhydrique.

Tel que décrit dans les exemples ci-après, selon le type d'acide, la température et le temps d'hydrolyse, la charge de surface peut être modulée.

Ainsi, une hydrolyse par l'acide chlorhydrique conduira à un état de surface quasiment neutre, alors qu'une hydrolyse par l'acide sulfurique introduira des charges sulfates (groupement $SO_3^-$) à la surface des nanocristaux de cellulose.

De tels traitements de type « hydrolyse chimique ménagée » sont par exemple décrits dans le document Elazzouzi-Hafraoui et al. (2008) précité ou dans le document Eichhorn S.J. et al (« Review : current international research into cellulose nanofibres and nanocomposites ». J Mater Sci 2010, 45, 1-33).

Par « dissolution/recristallisation », on entend un traitement par un solvant, par exemple acide phosphorique, urée/NaOH, liquides ioniques, etc., suivi d'une recristallisation. Un tel procédé est par exemple décrit dans le document Helbert et al.(Cellulose. 1998, 5, 113-122).

Avant leur intégration dans la composition, les nanocristaux de cellulose obtenus sont avantageusement soumis à un procédé de post-modification, à l'issue duquel leur densité de charges de surface et/ou leur hydrophobicité / hydrophilicité sont modifiées.

Cette post-modification vise à optimiser les caractéristiques de surface des nanocristaux de cellulose, notamment en fonction de l'émulsion dans laquelle ils sont introduits, de manière à optimiser sa stabilisation.

Pour modifier la densité de charges de surface, le procédé de post-modification consiste avantageusement en un procédé d'introduction ou d'hydrolyse de groupements en surface portant lesdites charges de surface.

Dans ce cas, l'opération de post-modification comprend une étape d'introduction ou d'hydrolyse de groupements de surface choisis parmi les groupements sulfonate, carboxylate, phosphate, phosphonate et sulfate.

A titre indicatif, pour l'introduction des groupements de surface respectifs, on peut mettre en oeuvre un procédé tel que décrit dans le document Habibi Y et al. « TEMPO-mediated surface oxidation of cellulose whiskers », Cellulose, 2006, 13(6), 679-687.

Encore à titre indicatif et à l'inverse, pour l'hydrolyse de tels groupements de surface, on peut mettre en oeuvre un traitement acide tel que décrit ci-après dans la partie Exemples ou un traitement mécanique de type sonication.

Dans ce cadre et selon un premier mode de réalisation, le procédé de fabrication consiste en un procédé d'hydrolyse acide ménagée de la cellulose par l'acide sulfurique, pour obtenir des nanocristaux de cellulose munis de groupements sulfate en surface.

Et le procédé de post-modification consiste en un procédé d'hydrolyse contrôlée desdits groupements sulfate, à savoir par exemple par un traitement acide (choisi par exemple parmi l'acide chlorhydrique ou l'acide trifluoroacétique) pendant un temps adapté au degré d'hydrolyse recherché.

Selon un second mode de réalisation, le procédé de fabrication consiste en un procédé d'hydrolyse acide ménagée de la cellulose par l'acide chlorhydrique.

Et le procédé de post-modification optionnel consiste en un procédé de post-sulfatation desdits nanocristaux de cellulose. Une telle post-sulfatation est avantageusement mise en oeuvre par un traitement acide des nanocristaux à l'acide sulfurique.

Pour modifier l'hydrophobicité, le procédé de post-modification consiste avantageusement en un procédé d'introduction ou d'hydrolyse de groupements présentant un caractère hydrophobe.

Parmi les groupements hydrophobes que l'on peut introduire ou éliminer, on peut citer notamment les groupements alkyle, aryle, phényle, benzyle, acétyle, hydroxybutyle, hydroxypropyle, polycaprolactone (ou PCL).

A titre indicatif, pour l'introduction et/ou l'hydrolyse des groupements de surface respectifs, on peut se référer aux documents suivants H Lonnberg et al., « Surface grafting of microfibrillated cellulose with poly(epsilon-caprolactone) - Synthesis and characterization », 2008 European polymer journal 44, 2991-2997, ou R. Debashish et al., « Cellulose modification by polymer grafting : a review » Chemical Society Reviews 2009 38 (7) 1825-2148.

La présente invention est encore illustrée, sans aucunement être limitée, par les exemples présentés ci-après.

## FIGURE

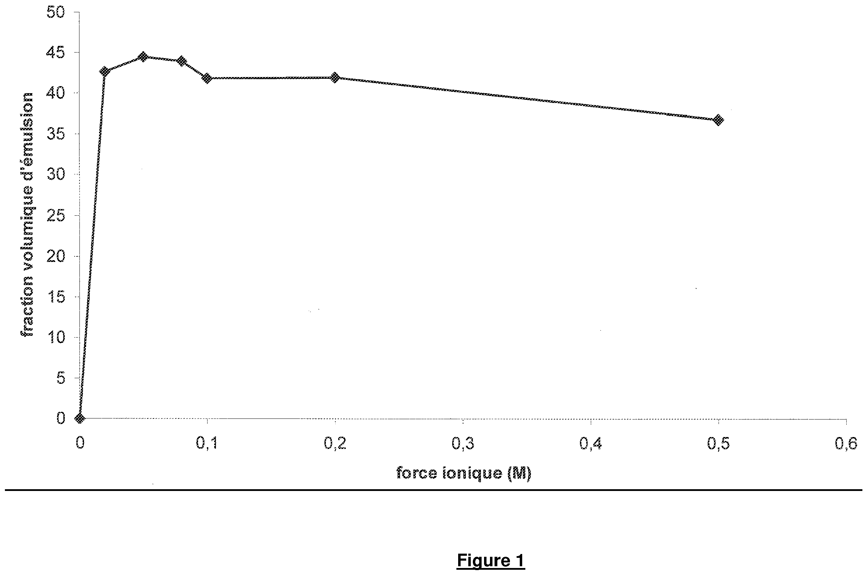

La figure 1 illustre l'influence de la force ionique de la composition d'émulsion, sur la stabilité de ladite émulsion. En abscisses, les valeurs de force ionique, exprimées en concentration molaire finale de NaCl de la phase aqueuse. En ordonnées, la fraction volumique d'émulsion, exprimée en pourcentage volumique.

## EXEMPLE :

**Préparation d'une émulsion de Pickering huile-dans-l'eau, stabilisée par des nanocristaux de cellulose**

### A. Protocoles

Protocole 1 : Préparation de nanocristaux de cellulose bactérienne

Le procédé d'obtention des nanocristaux de cellulose bactérienne est décrit par exemple dans le document N R Gilkes et al., J of Biological chemistry 1992, 267 (10), 6743-6749.

Des fragments de BCN sont nanofibrilés dans un mélangeur Waring, à pleine vitesse, dans une suspension aqueuse contenant des cubes de glace de sorte à combiner des stress de cisaillement et d'impact.

La pâte ainsi obtenue est égouttée au travers de filtres polyamides, puis suspendue dans une solution d'hydroxyde de sodium 0,5 N sous agitation dans un ballon fermé pendant deux heures à 70°C.

Après élimination des éléments alcalin par le biais de rinçages multiples avec de l'eau ajustée à pH 8, une étape de blanchiment est réalisée avec du chlorite de sorte à obtenir un composé de type hollocellulose, tel que décrit dans Gilkes et al. (Gilkes, N. R.; Jervis, E.; Henrissat, B.; Tekant, B.; Miller, R. C.; Warren, R. A. J.; Kilburn, D. G., The adsorption of a bacterial cellulase and its 2 isolated domains to crystalline cellulose. J. Biol. Chem. 1992, 267 (10), 6743-6749).

Typiquement, une solution de $NaClO_2$, 17 g/L, est mélangée avec un volume identique de tampon acétate pH 4,5 (27 g de NaOH +75 g d'acide acétique par litre).

La cellulose bactérienne blanchie est ensuite suspendue et chauffée sous agitation à 70°C, pendant deux heures avec reflux.

Ces étapes de traitement alcalin et de blanchiment sont répétées au moins une fois, pour l'obtention d'une pâte blanchie.

Cette cellulose bactérienne est ensuite hydrolysée au moyen d'une solution d'acide chlorhydrique (2,5 N, deux heures sous reflux).

Les composés acides sont éliminés par les opérations successives jusqu'à neutralité : centrifugation (10000g pendant 5 minutes) et dispersion dans une solution purifiée 18 Mohm.

Les nanocristaux de cellulose ainsi obtenus sont conservés à 4°C sous la forme d'une suspension 1%, avec ajout d'une goutte de $CHCl_3$ par 250 mL de suspension.

Protocole 2 : Préparation de nanocristaux de cellulose bactérienne post-sulfatés

Une suspension aqueuse de nanocristaux de cellulose bactérienne 1,34%, obtenue selon le protocole 1, est mélangée avec une solution de $H_2SO_4$ 2,2 M (soit un ratio 3/2 v/v) sous agitation vigoureuse à température ambiante.

Les nanocristaux sont ensuite déposés par centrifugation (10000 g / 5 min).

Le produit obtenu est mélangé avec des billes de verre (diamètre 3 mm), puis centrifugé à nouveau (10000 g / 10 min).

Les billes de verre recouvertes de nanocristaux sulfatés sont conservées au sec pendant deux heures à 40°C.

Les billes sont ensuite séchées au sein d'un dessiccateur, en présence de $P_2O_5$ à 50°C pendant 14 heures.

Les nanocristaux de cellulose sulfatés sont récupérés par lavage des billes à l'eau distillée, et centrifugation successive depuis 10000 tr/min jusqu'à 76000 tr/min pendant 10 à 30 minutes, pour obtenir une suspension colloïdale.

Enfin, le produit collecté est dialysé jusqu'à neutralité, et les électrolytes résiduels sont éliminés sur résine échangeuse d'ions (résine à lit mélangé TMD-8, forme hydrogène et hydroxyde).

Protocole 3 : Désulfatation de nanocristaux de cellulose bactérienne post-sulfatés

La suspension de nanocristaux de cellulose bactérienne à 2,2%, post-sulfatés selon le protocole 2, est chauffée durant trois heures à 100°C dans du HCl 2,5 N, puis lavée par centrifugation à 6000 tr/min pendant 5 minutes à six reprises.

Le produit collecté est ensuite dialysé jusqu'à neutralité, et les électrolytes résiduels sont éliminés sur une résine échangeuse d'ions (résine à lit mélangé TMD-8).

Protocole 4 : Préparation de nanocristaux de cellulose sulfatés issus de coton

Le procédé d'obtention des nanocristaux de cellulose de coton est décrit par exemple dans le document Elazzouzi-Hafraoui et al. (2008).

25 g de papier est humidifié dans 700 mL d'eau déionisée, puis la solution est mélangée jusqu'à obtention d'une mélange homogène. L'excès d'eau est ensuite retiré par filtration.

Le produit obtenu est suspendu dans 500 mL d'une solution d'acide sulfurique 61 %, maintenu à 72°C sous agitation durant 30 minutes.

La suspension est ensuite refroidie, lavée à l'eau ultrapure par centrifugations successives à 8000 tr/min pendant 15 minutes, et dialysée jusqu'à neutralité pendant trois jours avec une phase de réception constituée par de l'eau distillée.

Les électrolytes résiduels sont ensuite extraits au moyen d'une résine à lit mélangé (TMD-8, forme hydrogène et hydroxyle) pendant 4 jours.

La dispersion finale, constituée de coton sulfaté, est conservée à 4°C.

Protocole 5 : Désulfatation de nanocristaux de coton sulfaté

La désulfatation des nanocristaux de coton sulfatés selon le protocole 4 est réalisée par un traitement acide, au moyen de 5 mL d'une solution d'HCl 5 N ou d'une solution d'acide trifluoroacétique 10 N (TFA), ajoutée à 5 mL d'une suspension de nanocristaux de coton sulfatés à une concentration de 13 g/L.

Ce traitement acide est mis en oeuvre dans un contenant fermé et chauffé à 98-100°C sous agitation, pendant 1, 2, 5 ou 10 heures.

De manière alternative, 5 mL d'une solution TFA 10M est ajouté à 5 mL de nanocristaux de coton, avec une incubation durant 10 heures à 80°C sous agitation.

Les deux produits obtenus ont été rincés à l'eau par centrifugation (à six reprises, 6000 tr/min pendant 5-7 minutes).

Protocole 6 : Mesure du degré de sulfatation par titration conductimétrique

La titration conductimétrique permet de déterminer le degré de sulfatation des nanocristaux de cellulose.

Un tel procédé est décrit par exemple dans le document Goussé et al., 2002, Polymer 43, 2645-2651.

50 mL d'une suspension aqueuse de nanocristaux de cellulose (0,1 % poids/volume) sont maintenus sous agitation et dégazage pendant 10 minutes, avant titration avec une solution de NaOH 0,01 M.

La quantité de sulfate greffé est calculée en tenant compte du fait qu'un seul groupement hydroxyle OH peut être substitué par unité glucose, conduisant à un degré de substitution en sulfate (DS) donné par les équations suivantes :

$$DS = (V_{eq} \times C_{NaOH} \times M_w)/m$$

$$M_W = 162/(1 - 80 \times V_{eq} \times C_{NaOH})/m)$$

dans lesquelles

$V_{eq}$ est la quantité de NaOH en mL pour atteindre le point d'équivalence,
$C_{NaoH}$ est la concentration de NaOH exprimée en mol/L,
$M_w$ est le poids moléculaire moyen d'une unité de glucose,
m est la masse de cellulose titrée,
80 correspond à la différence entre le poids moléculaire d'une unité glucose sulfatée et le poids moléculaire d'une unité glucose non sulfatée.

La valeur obtenue par ces équations doit être corrigée par la fraction d'unité glucosidique en surface (GSF), pour obtenir le degré de substitution en surface désigné « DSs ».

Selon la structure des chaînes cellulosiques, seuls les groupes OH primaires (en C6) peuvent être estérifiés, et seulement 50% de ces groupes OH sont accessibles à la surface en raison de la conformation en alternance. Le DSs maximal est ainsi de 0,5.

Etant donné que les échantillons varient en morphologie et pour une application générale à tous les différentes particules cellulosiques, une équation générale a été définie afin de déterminer la valeur de fraction de glucose en surface (GSF) tenant compte du ratio de la section transversale (k) quelle que soit la longueur des particules.

Ainsi, pour une largeur donnée (Wxl) et un ratio d'aspect (k), on a :

$$GSF(k)=((2*((k*0,596)+0,532))/Wxl)-4*((k*0.532*0.596)/ Wxl^2)$$

Protocole 7 : Microscopie électronique en transmission (TEM)

20 $\mu$L d'une suspension aqueuse de nanocristaux de cellulose (0,1 % poids/volume) sont déposés sur une grille carbonée pour microscopie électronique ; l'excès de solvant absorbé, l'échantillon est marqué par ajout d'acétate d'uranyle (2% dans l'eau).

Cette grille pour microscopie électronique est ensuite séchée dans une étuve à 40°C.

Les grilles ont ensuite été observées avec un microscope électronique en transmission de marque JEOL (80kV).

Protocole 8 : Préparation d'une émulsion H/E stabilisée par des nanocristaux

Une première émulsion de Pickering huile dans l'eau est préparée en utilisant une phase aqueuse contenant une concentration connue de nanocristaux de cellulose.

Les autres émulsions ont été préparées en utilisant un ratio 30/70 huile/eau à partir d'une phase aqueuse contenant des nanoparticules à une concentration de 0,5 % en poids, par rapport au poids de l'émulsion (sans dilution supplémentaire).

Dans un tube Eppendorf, 0.3 mL d'hexadécane sont ajoutés à 0,7 mL de la suspension aqueuse ; pendant 30 secondes, le mélange est soumis à un traitement alternant 2 secondes de traitement ultrason et 5 secondes de repos.

Protocole 9 : Test de stabilité, microscopie optique

Les émulsions obtenues selon le protocole 8 sont centrifugées pendant 30 secondes à 10000 g. Etant donné la différence de densité entre l'hexadécane et l'eau, un crémage est observé. Le volume d'émulsion est évalué avant et après centrifugation.

Environ 15 μL de la solution de Pickering est incorporé dans 1 mL d'eau distillée. Le produit est mélangé par vortex, puis une goutte est déposée sur une lamelle pour observation au microscope.

Le diamètre des gouttelettes est mesuré à partir des images obtenues, par analyse d'images en utilisant un programme « imageJ »,.

Ces résultats ont par ailleurs été comparés à la distribution des tailles de gouttes déterminée par un dispositif Malvern MasterSizer employant un dispositif à diffraction de la lumière avec analyse par équation Fraunhofer. Le risque d'agrégation est dans ce cas limité par l'ajout de SDS (Sodium Dodécyl Sulfate) juste avant la mesure.

Protocole 10 : Microscopie électronique à balayage MEB

Pour préparer l'échantillon d'émulsion pour son observation par microscopie électronique à balayage (MEB), 280-380 mg d'un mélange styrène/initiateur (ratio st : V-65 120:1 poids/poids) sont mélangés avec 1,0 à 1,5 mL de solution à 0,5% d'un solution échantillon d'eau, soumis aux ultrasons pendant 1-2 min et dégazés avec de l'azote pendant 10 minutes.

L'émulsion a été obtenue par ultrasons pendant 30 secondes (impulsion de 3 secondes, séparées de 5 secondes).

Puis 500 μL d'eau sont ajoutés dans le système, traité ensuite par vortex.

Ce système est dégazé avec de l'azote pendant 10 minutes, et la polymérisation a eu lieu à 63°C sans agitation pendant 24h.

La préparation résultante est soumise à une étape de métallisation selon les techniques conventionnelles de microscopie électronique à balayage, avant observation.

Pour son observation par microscopie électronique à balayage, l'échantillon d'émulsion peut encore être préparé avec un autre initiateur, à savoir l'AIBN (azobisisobutyronitrile), selon le protocole suivant :

- dégazage et agitation de 17,5 mL de suspension de nanocristaux à 3 g/L 50 mM, pendant 10 min sous azote,
- ajout de 7,5 mL de styrène et de 69,8 mg d'AIBN,
- émulsification aux ultrasons pendant 1min,
- dégazage pendant 10min, et
- polymérisation sous agitation à 70°C, entre 1h et 24h.

La préparation résultante est soumise à une étape de métallisation selon les techniques conventionnelles de microscopie électronique à balayage, avant observation.

Protocole 11 : Acétylation de nanocristaux de cellulose bactérienne

5 mL d'une suspension de nanocristaux de cellulose bactérienne 1,34% sont mélangés avec 40 mL d'une solution d'acide acétique 100%.

L'eau est graduellement remplacée par l'acide acétique par distillation sur un évaporateur rotatif (la température du bain d'eau est inférieure à 40°C), puis centrifugée à cinq reprise (5 minutes à 10000 g).

40 mL de l'échantillon d'acide acétique sont divisés en deux parties.

Les deux parties sont mélangées et chauffées à 40°C pendant 5 minutes et pendant 1 minute avec 6 μL d'un catalyseur à 5 %.

Ensuite, 2,5 mL d'un mélange constitué d'anhydride acétique 98 % et d'acide acétique 100 % (dans un ratio 1:1 volume/volume) sont ajoutés.

La solution échantillon est observée sous une lumière polarisée de manière à détecter la présence de cristaux liquides.

La réaction est stoppée par l'ajout d'eau (ratio 1:1 v/v), soit après une minute pour une partie (B1), soit après trois minutes pour l'autre partie (B2).

Une ultracentrifugation finale (10000 g pendant 10-30 minutes) de toutes les solutions obtenues permet de collecter et de rincer le produit.

Le produit obtenu est mélangé avec une résine à lit mélangé pendant trois heures, puis ensuite filtré.

Protocole 12 : Acétylation de nanocristaux de cellulose de coton

10 mL d'une suspension à 2,4% en masse de nanoparticules de coton désulfatées (voir protocole 5 - les nanoparticules ont été désulfatées par HCl 2,5 N pendant 3 h) sont mélangés avec 90 mL d'acide acétique 100%.

L'eau est progressivement remplacée par l'acide acétique par distillation sur un évaporateur rotatif (la température du bain d'eau était inférieure à 40°C), puis centrifugation 5 fois 7min à 10000g.

80 mL de volume de l'échantillon dans l'acide acétique sont divisés en 2 fractions.

*Première méthode*

Les deux fractions ont été chauffées à 60°C avec 190 µL de catalyseur, à savoir une solution d'acide sulfurique à 5% en masse dans l'acide acétique, et agité.

Après 5 minutes, 5 mL d'un mélange constitué d'anhydride acétique à 98% et d'acide acétique à 100%, dans un ratio 1:1 v / v, sont ajoutés ; et la solution de l'échantillon a été mis sous observation en lumière polarisée pour observer le comportement des cristaux liquides de l'échantillon.

Lorsque la transformation en cristaux liquides est observée, la réaction est arrêtée par refroidissement dans un bain d'eau glacé ; 10 mL d'acide acétique 80% est en plus versé dans le ballon puis de l'eau, soit la moitié du volume de solution de l'échantillon.

La réaction est arrêtée après 1,5 min pour la première fraction, et après 0,5 min pour la seconde.

Enfin, une ultracentrifugation (65000 tr/mn pendant 15-30min) de la solution de second échantillon obtenu est réalisée afin de recueillir et de rincer les produits ; les électrolytes résiduels sont enlevés par résine échangeuse d'ions pendant 3 h avant la filtration.

*Deuxième méthode*

Une partie de l'échantillon (c-wh 3) est chauffée à 40°C sous agitation, pendant 5 minutes, puis après 1min avec 190µL de catalyseur à 5% (voir ci-dessus).

Puis 5 mL d'un mélange constitué d'anhydride acétique à 98% et d'acide acétique à 100% (ratio 1:1 v / v) sont ajoutés, et la solution échantillon est observée sous lumière polarisée pour vérifier le comportement des cristaux liquides de l'échantillon.

La réaction est arrêtée après 1 min par l'ajout d'eau dans le rapport 1:1 v / v.

L'autre partie (c-wh 4) est chauffée à 40°C sous agitation pendant 5 minutes, puis sont ajoutés 5 mL d'un mélange constitué d'anhydride acétique à 98% et d'acide acétique à 100% dans un rapport 1:1 v / v.

Puis 6µL d'un catalyseur à 5% (voir ci-dessus) sont ajoutés dans le mélange ; la réaction est arrêtée en 1 min en rapportant de l'eau dans un rapport 1:1 v / v.

Enfin, toutes les solutions sont soumises à une ultracentrifugation (65000 tr/mn pendant 15-30min) afin de recueillir et de rincer les produits ; les électrolytes résiduels sont enlevés par résine échangeuse d'ions pendant 3 h avant filtration.

Acétylation par l'anhydride acétique 98%

10 mL d'une solution à 2,4% en masse de whiskers de coton désulfatés (c-wh est désulfaté par HCl 2,5 N pendant 3 h) sont mélangés avec 90 mL d'acide acétique à 100% ; l'eau est éliminée au moyen d'un évaporateur rotatif (la température du bain d'eau obtenue est inférieure à 40°C).

a) 4 mL d'anhydride acétique à 98% sont ajoutés à 40 mL de la solution obtenue après 1 min sous agitation, puis environ 90 mL d'eau sont ajouté (1AA-d-c-WH).

b) 12 mL d'anhydride acétique à 98% sont ajoutés dans 40 mL de solution obtenue après 15 min sous agitation, puis environ 80 mL d'eau sont ajoutés (3AA-d-c-WH).

Les deux échantillons sont lavés à l'eau par centrifugation, et conservés avec un lit de résine pendant 3h, puis filtrées.

Acétylation par étapes au moyen d'anhydride acétique à 98%

5 mL d'une solution à 2,4% en masse de whiskers de coton désulfatés (c-wh est désulfaté par HCl 2,5 N pendant 3 h) sont mélangés avec 0,5 mL d'acide anhydride à 98%, la réaction étant maintenue pendant 10min sous agitation ; la même procédure est répétée 9 fois.

Le mélange est ensuite divisé en deux fractions.

a) une fraction est lavée avec de l'eau par centrifugation et conservée avec un lit de résine pendant 3 h, puis filtré (fraction STW1)

b) l'autre fraction est conservée en présence de l'acide anhydride à 4°C une nuit, rincée à l'eau par centrifugation et conservée avec un lit de résine pendant 3 h, puis filtré (fraction STW2)

Protocole 13 : Greffage en surface de poly-e-caprolactone

Le greffage en surface de poly-e-caprolactone est réalisé sur BCN et whiskers de coton.

50mg de whiskers séchés sont mélangés avec 860mg de e-caprolactone pendant 48h.

800mg de poly-e-caprolactone sont ensuite ajoutés, et la dispersion est soumise à un traitement 5x10sec.

1,5µL d'alcool benzylique sont ajoutés en tant que co-initiateur, puis dégazé à l'azote pendant 30 min.

La solution est chauffée à 95°C ; 27µL de Sn(Oct)$_2$ est ajouté sous atmosphère azotée.

La polymérisation est poursuivie pendant 18h, avant redispersion du produit dans 2 mL de THF, filtré et rincé avec du méthanol.

## B. Résultat

Résultat 1 : Stabilisation d'une émulsion au moyen de nanoparticules de cellulose bactérienne

Les nanocristaux de cellulose bactérienne sont obtenues selon le protocole 1, et consistent en des particules neutres.

Comme montré ci-dessous, ces nanocristaux présentent d'excellentes propriétés pour former des émulsions de Pickering particulièrement stables.

De telles émulsions ont été réalisées selon le protocole 8, pour différents ratios hexadécane / phase aqueuse, à savoir depuis un ratio 10:90 jusqu'à un ratio 50:50.

Ainsi, la concentration en particules dans les émulsions varie avec la fraction volumique de l'eau dans lesdites émulsions.

L'analyse par microscopie optique selon le protocole 9 donne les résultats précisés dans le tableau 1 ci-dessous.

Tableau 1

| Echantillon (rapport hexadécane-eau) | nombre de gouttes | Aire moyenne µm$^2$ | Dn moyen µm | Dw moyen µm | polydispersité | % agrégats |
|---|---|---|---|---|---|---|
| 10-90 | 250 | 6.4 | 3.0 | 3.4 | 1.15 | 95.0 |
| 20-80 | 250 | 7.9 | 3.3 | 3.7 | 1.12 | 92.2 |
| 30-70 | 855 | 13.9 | 4.3 | 4.8 | 1.12 | 71.3 |
| 40-60 | 252 | 18.1 | 4.9 | 5.5 | 1.12 | 65.4 |
| 50-50 | 259 | 24.0 | 5.6 | 6.4 | 1.14 | 35.8 |

Les mesures de nombre de gouttes, d'aire moyenne, de diamètre moyen en nombre (Dn moyen), de diamètre moyen en poids (Dw moyen), de polydispersité (Dw moyen / Dn moyen) et de pourcentage d'agrégats, ont été mesurés comme décrit par Putaux et al. (1999, International journal of Biological Macromolecules, Vol. 26 (2-3) : 145-150) et par Barakat et al. (2007, Biomacromolecules, Vol. 8 (4) : 1236-1245).

Pour ces différents ratios, approximativement le même diamètre moyen est mesuré par analyse d'image, à savoir 4±2 µm avec une polydispersité de 1,13 ±0.2.

La principale différence concerne le taux d'agrégation qui diminue avec la diminution de la quantité de particules par mL de phase hydrophobe.

Selon ces résultats et afin de limiter les phénomènes d'agrégations, un ratio de 30:70 est choisi pour les expériences suivantes.

La stabilité des échantillons, conservés dans des conditions différentes (temps, température), est évaluée selon le protocole 9.

Aucune variation de la taille des gouttelettes n'a été observée, même après le maintien des échantillons pendant un mois à 4°C ou 40°C, ou jusqu'à 3 heures à 80°C.

Résultat 2 : Caractérisation des nanocristaux de cellulose

Les nanocristaux de cellulose bactérienne obtenus selon les protocoles 1 à 5, sont caractérisés par microscopie électronique en transmission conformément au protocole 7. Les caractéristiques de surfaces de nanocristaux et les caractéristiques de l'émulsion sont déterminées selon les protocoles 6 et 9.
Les résultats obtenus sont récapitulés dans le tableau 2 suivant.

Tableau 2

| Echantillon | Longueur / épaisseur en nm | DS (sulfate/ sucre) | Densité de charge (sulfate/nm$^2$) | Nbre de charge par nanocristaux | Taille des goutellettes ($\mu$m) Dnou image J |
|---|---|---|---|---|---|
| BCN | 919 / 17 | $1.96*10^{-4}$ | $9.68*10^{-4}$ | 42.9 | 4.3 |
| s-BCN | 644 / 17 | $2.41*10^{-3}$ | $1.19*10^{-2}$ | 370.7 | 6.8 |
| d-s-BCN | 624 / 12 | $5.92*10^{-4}$ | $2.92*10^{-3}$ | 69.8 | 3.4 |
| Cotton t0 | 189 / 13 | $7.92.10^{-3}$ | 0,123 | 952 | 11.0 |
| Cotton t1h HCl | 157 / 13 | $2.23.10^{-3}$ | 0,035 | 224 | 6.7 |
| Cotton t2h | 147 / 13 | $1.21.10^{3}$ | 0,019 | 114 | 3.2 |
| Cotton t5h | 141 / 13 | $1.24.10^{-3}$ | 0,019 | 123 | 3.7 |
| Cotton t10h | 117 / 13 | $1.32.10^{-3}$ | 0,020 | 100 | 5.9 |
| Cotton t10h TFA | 128 / 13 | $1.08.10^{-3}$ | 0,017 | 89 | 5.3 |

On précise que pour le Tableau 2, la densité de charge peut être exprimée indifféremment en e.nm$^{-2}$ ou en sulfate.nm-2, du fait que l'ion sulfate porte une charge unique.
Les analyses en microscopie électronique montrent que les particules ont toutes une forme allongée.
Pour tous les nanocristaux de cellulose, l'hydrolyse par l'acide sulfurique a tendance à diminuer la longueur. Par exemple, la BCN est diminuée en passant de 919 nm à 644 nm, sans variation notable de largeur après l'étape de sulfatation.
En revanche, l'hydrolyse par l'acide chlorhydrique a tendance à peler la surface des nanocristaux de cellulose et ainsi à réduire ou même éliminer les groupes sulfate, et donc réduire ou éliminer les charges correspondantes.
L'émulsion correspondante est très stable (au moins une année), et résiste à la congélation et au chauffage (2 heures à 80°C).

Résultat 3 : Influence de la force ionique sur la stabilité des émulsions.

On a préparé des émulsions à partir de nanocristaux de cellulose de coton comme décrit dans le Protocole 8
Pour la préparation d'émulsions, on a utilisé un milieu aqueux ayant des valeurs croissantes de force ionique.
Plus précisément, on a utilisé des milieux aqueux liquides ayant des valeurs croissantes de concentration finale en NaCl, comme indiqué dans le Tableau 3 ci-dessous.

Tableau 3

| NaCl (M) | Epaisseur (mm) | % volumique | Zeta pot (mV) |
|---|---|---|---|
| 0 | 0 | 0 | -55 |
| 0,02 | 9,2 | 42.6 | -35 |
| 0,05 | 9,6 | 44.4 | -25 |
| 0,08 | 9,5 | 44.0 | -10 |
| 0,1 | 9 | 41.9 | ~0 |
| 0,2 | 9,08 | 42.0 | ND* |

(suite)

| NaCl (M) | Epaisseur (mm) | % volumique | Zeta pot (mV) |
|----------|----------------|-------------|---------------|
| 0,5 | 7,97 | 36.9 | ND |
| *ND : Non Déterminé | | | |

Les résultats sont présentés simultanément dans le Tableau 3 et la figure 1.

Les résultats présentés dans le tableau 3 montrent l'évolution de l'épaisseur de l'émulsion obtenue après crémage (centrifugation) ; il s'agit d'une valeur relative en mm, d'un pourcentage volumique émulsionné et des valeurs de potentiel zeta qui illustre le niveau d'écrantage des charges de surface par le NaCl ajouté.

Les résultats présentés sur la Figure 1 illustrent encore plus clairement l'obtention d'une stabilité des émulsions de l'invention, dès qu'est atteinte la valeur de force ionique apportée par une concentration finale en NaCl de 20 mM.

**Revendications**

1. Composition sous forme d'une émulsion comprenant une phase hydrophobe dispersée dans une phase aqueuse, laquelle composition contient des particules émulsionnantes aptes à stabiliser ladite émulsion, **caractérisée en ce que** certaines au moins desdites particules consistent en des nanocristaux de cellulose de forme allongée qui vérifient les caractéristiques suivantes : une longueur comprise entre 25 nm et 1 $\mu$m, et une largeur comprise entre 5 et 30 nm.

2. Composition selon la revendication 1, **caractérisée en ce que** les nanocristaux de cellulose vérifient les caractéristiques suivantes : une longueur comprise entre 100 nm et 1 $\mu$m, et une largeur comprise entre 5 et 20 nm.

3. Composition selon l'une quelconque des revendications 1 ou 2, **caractérisée en ce que** les nanocristaux de cellulose ont un rapport longueur/largeur supérieur à 1 et inférieur à 100, et de préférence compris entre 10 et 55.

4. Composition selon l'une quelconque des revendications 1 à 3, **caractérisée en ce que** les nanocristaux de cellulose ont une densité de charges de surface maximale de 0,5 e.nm$^{-2}$, e correspondant à une charge électrique élémentaire.

5. Composition selon la revendication 4, **caractérisée en ce que** les nanocristaux de cellulose comportent une surface chargée, avec une densité de charges de surface comprise entre 0,01 e.nm$^{-2}$ et 0,31 e.nm$^{-2}$.

6. Composition selon la revendication 5, **caractérisée en ce que** les nanocristaux de cellulose comportent des charges de surface négatives,
lesquels nanocristaux de cellulose comportent de préférence, en surface, des groupements anioniques portant les charges de surface,
lesquels groupements anioniques des nanocristaux de cellulose sont choisis de préférence parmi les groupements sulfonate, carboxylate, phosphate, phosphonate et sulfate.

7. Composition selon la revendication 4, **caractérisée en ce que** les nanocristaux de cellulose ont une surface neutre, la densité de charges de surface étant inférieure ou égale à 0,01 e.nm$^{-2}$.

8. Composition selon l'une quelconque des revendications 1 à 7, **caractérisée en ce que** ladite composition comporte une force ionique inférieure à une force ionique équivalente à 10 mM de NaCl, et **en ce que** les nanocristaux de cellulose comportent une densité de charges de surface maximale de 0,03 e.nm$^{-2}$.

9. Composition selon l'une quelconque des revendications 1 à 8, **caractérisée en ce que** les nanocristaux de cellulose comportent, en surface, des groupements hydrophobes,
lesquels groupements hydrophobes des nanocristaux de cellulose consistent de préférence en des groupements acétyle.

10. Composition selon l'une quelconque des revendications 1 à 9, **caractérisée en ce que** :

 - elle comprend de 0,035 % à 2 % en poids, de préférence de 0,05 % à 1 % en poids, de nanocristaux de cellulose par rapport au poids total de ladite composition, et/ou
- la phase hydrophobe représente de 5 % à 45 % en poids par rapport au poids total de ladite composition, et/ou
- la phase hydrophobe est choisie parmi les huiles végétales, les huiles animales, les huiles minérales, les huiles de synthèse, les solvants organiques hydrophobes et les polymères liquides hydrophobes, et/ou
- la composition est choisie parmi les compositions alimentaires, les compositions cosmétiques, les compositions pharmaceutiques et les compositions phytosanitaires.

**11.** Utilisation de nanocristaux de cellulose tels que définis dans l'une quelconque des revendications 1 à 9, pour stabiliser une émulsion comprenant une phase hydrophobe dispersée dans une phase aqueuse.

**12.** Procédé pour la fabrication d'une composition sous forme d'émulsion selon l'une quelconque des revendications 1 à 10, **caractérisé en ce qu'**il comprend les étapes suivantes :

(a) la fourniture de nanocristaux de cellulose tels que définis dans l'une quelconque des revendications 1 à 9, puis
(b) l'incorporation desdits nanocristaux de cellulose dans la phase aqueuse de ladite composition, de sorte à stabiliser ladite émulsion.

**13.** Procédé selon la revendication 12, **caractérisé en ce que** les nanocristaux de cellulose fournis à l'étape (a) sont obtenus par un procédé de fabrication à partir d'une cellulose, ledit procédé de fabrication étant choisi parmi l'un des procédés suivants : fractionnement mécanique, hydrolyse chimique ménagée, et dissolution/recristallisation, dans lequel procédé de fabrication des nanocristaux de cellulose est de préférence suivi par un procédé de post-modification desdits nanocristaux de cellulose à l'issue duquel leur densité de charges de surface et/ou leur hydrophobicité sont modifiées,
lequel procédé de post-modification consiste de préférence en un procédé d'introduction ou d'hydrolyse des groupements portant les charges de surface.
laquelle opération de post-modification comprend de préférence une étape d'introduction ou d'hydrolyse de groupements de surface choisis parmi les groupements sulfonate, carboxylate, phosphate, phosphonate et sulfate.

**14.** Procédé selon la revendication 13, **caractérisé en ce que** :

- le procédé de fabrication consiste en un procédé d'hydrolyse acide ménagée de la cellulose par l'acide sulfurique, pour obtenir des nanocristaux de cellulose munis de groupements sulfate en surface, et **en ce que** le procédé de post-modification optionnel consiste en un procédé d'hydrolyse contrôlée desdits groupements sulfate, ou
- le procédé de fabrication consiste en un procédé d'hydrolyse acide ménagée de la cellulose par l'acide chlorhydrique, et **en ce que** le procédé de post-modification optionnel consiste en un procédé de post-sulfatation desdits nanocristaux de cellulose.

**15.** Procédé selon l'une quelconque des revendications 13 ou 14, **caractérisé en ce que** la cellulose est choisie parmi l'une au moins des celluloses d'origine suivante : végétale, animale, bactérienne, algale ou régénérée à partir d'une cellulose transformée de sources commerciales.

**Patentansprüche**

**1.** Zusammensetzung in Form einer Emulsion, die eine in einer wässrigen Phase dispergierte hydrophobe Phase umfasst, wobei die Zusammensetzung emulgierende Partikel enthält, die zum Stabilisieren der Emulsion geeignet sind, **dadurch gekennzeichnet, dass** mindestens einige dieser Partikel aus Cellulose-Nanokristallen mit länglicher Form bestehen, die die folgenden Merkmale erfüllen: eine Länge zwischen 25 nm und 1 $\mu$m und eine Breite zwischen 5 und 30 nm.

**2.** Zusammensetzung nach Anspruch 1, **dadurch gekennzeichnet, dass** die Cellulose-Nanokristalle die folgenden Merkmale erfüllen: eine Länge zwischen 100 nm und 1 $\mu$m und eine Breite zwischen 5 und 20 nm.

**3.** Zusammensetzung nach einem der Ansprüche 1 oder 2, **dadurch gekennzeichnet, dass** die Cellulose-Nanokristalle ein Länge/Breite-Verhältnis von mehr als 1 und weniger als 100 und vorzugsweise zwischen 10 und 55 aufweisen.

**4.** Zusammensetzung nach einem der Ansprüche 1 bis 3, **dadurch gekennzeichnet, dass** die Cellulose-Nanokristalle eine maximale Dichte an Oberflächenladungen von 0,5 e.nm$^{-2}$ besitzen, wobei e einer elektrischen Elementarladung entspricht.

**5.** Zusammensetzung nach Anspruch 4, **dadurch gekennzeichnet, dass** die Cellulose-Nanokristalle eine geladene Oberfläche mit einer Dichte an Oberflächenladungen zwischen 0,01 e.nm$^{-2}$ und 0,31 e.nm$^{-2}$ aufweisen.

**6.** Zusammensetzung nach Anspruch 5, **dadurch gekennzeichnet, dass** die Cellulose-Nanokristalle negative Oberflächenladungen aufweisen,
wobei die Cellulose-Nanokristalle vorzugsweise an der Oberfläche anionische Gruppen aufweisen, die die Oberflächenladungen tragen,
wobei die anionischen Gruppen der Cellulose-Nanokristalle vorzugsweise aus Sulfonat-, Carboxylat-, Phosphat-, Phosphonat- und Sulfatgruppen ausgewählt sind.

**7.** Zusammensetzung nach Anspruch 4, **dadurch gekennzeichnet, dass** die Cellulose-Nanokristalle eine neutrale Oberfläche besitzen, wobei die Dichte an Oberflächenladungen kleiner als oder gleich 0,01 e.nm$^{-2}$ ist.

**8.** Zusammensetzung nach einem der Ansprüche 1 bis 7, **dadurch gekennzeichnet, dass** die Zusammensetzung eine Ionenstärke aufweist, die kleiner als eine 10 mM NaCl entsprechende Ionenstärke ist, und dadurch, dass die Cellulose-Nanokristalle eine maximale Dichte an Oberflächenladungen von 0,03 e.nm$^{-2}$ aufweisen.

**9.** Zusammensetzung nach einem der Ansprüche 1 bis 8, **dadurch gekennzeichnet, dass** die Cellulose-Nanokristalle an der Oberfläche hydrophobe Gruppen aufweisen,
wobei diese hydrophoben Gruppen der Cellulose-Nanokristalle vorzugsweise aus Acetylgruppen bestehen.

**10.** Zusammensetzung nach einem der Ansprüche 1 bis 9, **dadurch gekennzeichnet, dass**

- sie 0,035 Gew.-% bis 2 Gew.-%, vorzugsweise 0,05 Gew.-% bis 1 Gew.-% Cellulose-Nanokristalle, bezogen auf das Gesamtgewicht der Zusammensetzung, umfasst und/oder
- die hydrophobe Phase 5 Gew.-% bis 45 Gew.-%, bezogen auf das Gesamtgewicht der Zusammensetzung, ausmacht und/oder
- die hydrophobe Phase aus pflanzlichen Ölen, tierischen Ölen, Mineralölen, synthetischen Ölen, hydrophoben organischen Lösungsmitteln und hydrophoben flüssigen Polymeren ausgewählt ist und/oder
- die Zusammensetzung aus Lebensmittelzusammensetzungen, Kosmetikzusammensetzungen, pharmazeutischen Zusammensetzungen und Pflanzenschutzzusammensetzungen ausgewählt ist.

**11.** Verwendung von Cellulose-Nanokristallen nach einem der Ansprüche 1 bis 9 zum Stabilisieren einer Emulsion, die eine in einer wässrigen Phase dispergierte hydrophobe Phase umfasst.

**12.** Verfahren zur Herstellung einer Zusammensetzung in Form einer Emulsion nach einem der Ansprüche 1 bis 10, **dadurch gekennzeichnet, dass** es die folgenden Schritte umfasst:

(a) Bereitstellen von Cellulose-Nanokristallen nach einem der Ansprüche 1 bis 9 und anschließend
(b) Einbringen der Cellulose-Nanokristalle in die wässrige Phase der Zusammensetzung, um die Emulsion zu stabilisieren.

**13.** Verfahren nach Anspruch 12, **dadurch gekennzeichnet, dass** die in Schritt (a) bereitgestellten Cellulose-Nanokristalle durch ein Herstellungsverfahren aus einer Cellulose erhalten werden, wobei das Herstellungsverfahren aus einem der folgenden Verfahren ausgewählt ist: mechanische Fraktionierung, schonende chemische Hydrolyse und Lösen/Umkristallisieren,
wobei auf das Verfahren zur Herstellung der Cellulose-Nanokristalle vorzugsweise ein Verfahren der Nachmodifikation der Cellulose-Nanokristalle folgt, an dessen Ende deren Dichte an Oberflächenladungen und/oder deren Hydrophobizität modifiziert ist/sind,
wobei das Nachmodifikationsverfahren vorzugsweise aus einem Verfahren des Einbringens oder der Hydrolyse von Gruppen, die die Oberflächenladungen tragen, besteht,
wobei der Nachmodifikationsschritt vorzugsweise einen Schritt des Einbringens oder der Hydrolyse von Oberflächengruppen umfasst, die aus Sulfonat-, Carboxylat-, Phosphat-, Phosphonat- und Sulfatgruppen ausgewählt sind.

**14.** Verfahren nach Anspruch 13, **dadurch gekennzeichnet, dass**:

- das Herstellungsverfahren aus einem Verfahren der schonenden sauren Hydrolyse von Cellulose durch Schwefelsäure besteht, um Cellulose-Nanokristalle zu erhalten, die an der Oberfläche mit Sulfatgruppen versehen sind, und dadurch, dass das optionale Nachmodifikationsverfahren aus einem Verfahren der kontrollierten Hydrolyse der Sulfatgruppen besteht, oder
- das Herstellungsverfahren aus einem Verfahren der schonenden sauren Hydrolyse der Cellulose durch Salzsäure besteht, und dadurch, dass das optionale Nachmodifikationsverfahren aus einem Nachsulfatierungsverfahren der Cellulose-Nanokristalle besteht.

**15.** Verfahren nach einem der Ansprüche 13 oder 14, **dadurch gekennzeichnet, dass** die Cellulose aus mindestens einer der Cellulosen folgenden Ursprungs ausgewählt ist: pflanzlich, tierisch, bakteriell, aus Algen oder aus einer umgewandelten Cellulose aus handelsüblichen Quellen regeneriert.

**Claims**

**1.** A composition in the form of an emulsion comprising a hydrophobic phase dispersed in an aqueous phase, which composition contains emulsifying particles capable of stabilizing said emulsion, wherein at least some of said particles do consist of cellulose nanocrystals having an elongated shape which satisfy the following features: a length ranging from 25 nm to 1 $\mu$m, and a width ranging from 5 to 30 nm.

**2.** A composition according to claim 1, wherein the cellulose nanocrystals satisfy the following features: a length ranging from 100 nm to 1 $\mu$m, and a width ranging from 5 to 20 nm.

**3.** A composition according to claim 1 or 2, wherein the cellulose nanocrystals have a length to width ratio higher than 1 and lower than 100, and preferably ranging from 10 to 55.

**4.** A composition according to any of the claims 1 to 3, wherein the cellulose nanocrystals have a surface charge density of maxi. 0.5 e.nm$^{-2}$, e standing for elementary electric charge.

**5.** A composition according to claim 4, wherein the cellulose nanocrystals comprise a charged surface, with a surface charge density ranging from 0.01 e.nm$^{-2}$ to 0.31 e.nm$^{-2}$.

**6.** A composition according to claim 5, wherein the cellulose nanocrystals comprise surface negative charges, wherein the cellulose nanocrystals have preferably surface charge-carrying anionic groups on the surface thereof, wherein the anionic groups of the cellulose nanocrystals are preferably chosen from sulfonate, carboxylate, phosphate, phosphonate and sulfate groups.

**7.** A composition according to claim 4, wherein the cellulose nanocrystals have a neutral surface, the surface charge density being lower than or equal to 0.01 e.nm$^{-2}$.

**8.** A composition according to any one of claims 1 to 7, wherein said composition has an ionic force lower than an ionic force corresponding to 10 mM NaCl, and wherein the cellulose nanocrystals have a surface charge density of maxi. 0.03 e.nm$^{-2}$.

**9.** A composition according to any one of claims 1 to 8, wherein the cellulose nanocrystals have hydrophobic groups on the surface thereof,
wherein the hydrophobic groups of the cellulose nanocrystals do consist preferably of acetyl groups.

**10.** A composition according to any one of claims 1 to 9, wherein

- said composition comprises from 0.035% to 2% by weight, preferably from 0.05% to 1% by weight, of cellulose nanocrystals relative to the total weight of said composition, and/or,
- the hydrophobic phase represents from 5% to 45% by weight relative to the total weight of said composition, and/or
- the hydrophobic phase is selected from vegetable oils, animal oils, mineral oils, synthetic oils, hydrophobic organic solvents and hydrophobic liquid polymers, and/or

- the composition is selected from food compositions, cosmetic compositions, pharmaceutical compositions and phytosanitary compositions.

11. Use of cellulose nanocrystals such as defined in any one of claims 1 to 9, to stabilize an emulsion comprising a hydrophobic phase dispersed in an aqueous phase.

12. A method for preparing a composition in the form of an emulsion according to any one of claims 1 to 10, which comprises the following steps of:

(a) providing cellulose nanocrystals such as defined in any one of claims 1 to 9, thereafter
(b) incorporating said cellulose nanocrystals to the aqueous phase of said composition, so as to stabilize said emulsion.

13. A method according to claim 12, wherein the cellulose nanocrystals provided in step (a) are obtained through a production method from a cellulose, said production method being selected from the following methods: mechanical fractionation, adjusted chemical hydrolysis, and dissolution/recrystallization,
wherein the method for making cellulose nanocrystals is preferably followed with a method of post-modification of said cellulose nanocrystals, at the end of which their surface charge density and/or their hydrophobicity are modified,
wherein the post-modification method does consist preferably of a method for introducing or hydrolyzing surface charge-carrying groups,
wherein the post-modification process comprises preferably a step of introducing or hydrolyzing surface groups chosen from sulfonate, carboxylate, phosphate, phosphonate and sulfate groups.

14. A method according to claim 13, wherein:

- the production method does consist of a sulfuric acid-mediated adjusted acid hydrolysis method for cellulose, to obtain cellulose nanocrystals provided with sulfate groups on their surface, and wherein the optional post-modification process does consist of a controlled hydrolysis for said sulfate groups, or
- the production method does consist of a hydrochloric acid-mediated adjusted acid hydrolysis method for cellulose, and wherein the optional post-modification method does consist of a post-sulfation process of said cellulose nanocrystals.

15. A method according to any one of claims 13 or 14, wherein the cellulose is selected amongst at least one from the various following origins thereof: plants, animals, bacteria, algae or from those regenerated from a transformed cellulose available on the market.

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2794466
- EP 1057477 A

**Littérature non-brevet citée dans la description**

- **ASHBY et al.** Pickering emulsions stabilised by Laponite clay particles. *Phys. Chem. Chem. Phys,* 24 Novembre 2000, vol. 2
- **MADIVALA et al.** Exploiting particle shape in solid stabilized emulsions. *SOFT MATTER,* 02 Mars 2009, vol. 5
- **OUGIYA et al.** Emulsion-stabilizing effect of bacterial cellulose. *Bioscience biotechnology biochemistry,* 01 Janvier 1997, vol. 61 (9
- **SAMIR et al.** *Biomacromolecules,* 2005, vol. 6, 612-626
- **ELAZZOUZI-HAFRAOUI et al.** *Biomacromolecules,* 2008, vol. 9 (1), 57-65
- **EICHHORN S.J. et al.** Review : current international research into cellulose nanofibres and nanocomposites. *J Mater Sci,* 2010, vol. 45, 1-33
- **HELBERT et al.** *Cellulose,* 1998, vol. 5, 113-122
- **HABIBI Y et al.** TEMPO-mediated surface oxidation of cellulose whiskers. *Cellulose,* 2006, vol. 13 (6), 679-687
- **H LONNBERG et al.** Surface grafting of microfibrillated cellulose with poly(epsilon-caprolactone) - Synthesis and characterization. *European polymer journal,* 2008, vol. 44, 2991-2997
- **R. DEBASHISH et al.** Cellulose modification by polymer grafting : a review. *Chemical Society Reviews,* 2009, vol. 38 (7), 1825-2148
- **N R GILKES et al.** *J of Biological chemistry,* 1992, vol. 267 (10), 6743-6749
- **GILKES, N. R. ; JERVIS, E. ; HENRISSAT, B. ; TEKANT, B. ; MILLER, R. C. ; WARREN, R. A. J. ; KILBURN, D. G.** The adsorption of a bacterial cellulase and its 2 isolated domains to crystalline cellulose. *J. Biol. Chem.,* 1992, vol. 267 (10), 6743-6749
- **GOUSSÉ et al.** *Polymer,* 2002, vol. 43, 2645-2651
- **PUTAUX et al.** *International journal of Biological Macromolecules,* 1999, vol. 26 (2-3), 145-150
- **BARAKAT et al.** *Biomacromolecules,* 2007, vol. 8 (4), 1236-1245